# EUROPEAN PATENT APPLICATION

(11) **EP 0 748 022 A1**
(43) Date of publication of application: **11.12.1996**
(21) Application number: 95111944.5
(22) Date of filing: 29.07.1995
(51) Int. Cl.: H02H 7/085, H01H 85/048

(54) **Device for the protection of electric motors against high temperatures and currents**

(30) Priority: 06.06.1995 IT MI951169
(71) Applicant: AMETEK ITALIA Ciaramella Division Srl, I-20087 Robecco sul Naviglio (Milano) (IT)
(72) Inventor: Baretella, Oscar, I-20127 Milano (IT)
(74) Representative: de Pasquale, Carlo

(57) **Abstract**

The present invention has the scope of protecting the winding against both overtemperature and excessive currents, by using a single device. The invention consists of the idea of constructing a controlled-resistance element acting as a temperature operated fuse to be mounted in contact with the winding, namely a alloy element, designed to melt at a predetermined temperature when, for any reason, this temperature is reached by the stator winding, and designed and constructed in the form of a resistor which also melts when carrying a predetermined current.

## Description

It is well known that electric motors must be protected against the overheating of stator windings and against excessive current rises, which normally happen as a result of operating difficulties in the machines to which they are connected. These could, for example, consist of the blocking of the machine, and consequently of the motor, or prolonged operation under conditions in which the motor power is exceeded.

At the moment, protection against the two above-mentioned difficulties is obtained by means of two distinct devices:
- a tempetature-sensitive fuse as protection against overheating of the stator winding,
- a temperature regulator (thermostat) of the automatically resetting or manual type, as protection against an excessive increase in electric current.
Each type of motor has its own maximum values of temperature and current. The above-mentioned device must exercise their protective action at those values, in accordance with standards laid down by various countries.

Temperature regulators with automatic reset have the drawback of suddenly re-starting the motor whilst the user checks the reason behind the blocking of the motor. This creates the danger of physical injuries to a user who, absentmindedly, fails to switch off the voltage supply to the machine before starting to inspect it.

In addition, when subjected to very high currents, of the order of several times the operating level, temperature regulators may suffer from contact sticking (fusion), with the consequent loss of motor protection.

As is well known to experts in this field, failure to act on the part of these devices causes a fire in the motor within several minutes.

The present invention has the scope of protecting the winding against both overtemperature and excessive currents, by using a single device.

The invention consists of the idea of constructing a controlled-resistance element acting as a temperature operated fuse to be mounted in contact with the winding, namely a composite (alloy) element, designed to melt at a predetermined temperature when, for any reason, this temperature is reached by the stator winding, and designed and constructed in the form of a resistor which also melts when carrying a predetermined current, exceeding several times the operating one.

In other words, starting with an alloy which melts at a predetermined temperature, its resistivity is determined and it is given a shape (normally that of a wire) of such dimensions that it can melt when carrying a predetermined current.

The device, which functions substantially as a resistor, is constructed as not to act immediately, but when carrying the current, for which it has been calibrated, for a certain time, of the order of a few seconds. This is dictated by the necessity to ensure that the protection device does not operate in the case of frequent successive motor start-ups, during which the stator winding frequently carries currents higher than the normal operating one.

The invention will be better understood by considering a particular design, shown as a non-limiting example in the attached design table illustrating in:
- fig. 1 -: a view of a semi-stator taken from above,
- fig. 2 -: a front sectional view of the device in accordance with the invention.

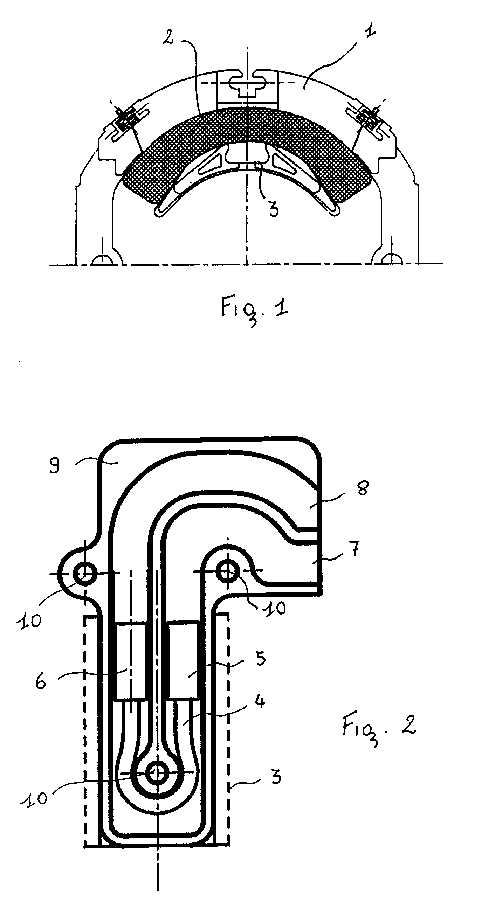

Referring to figures 1 and 2, one of the two stator insulating heads is indicated with 1, while the corresponding winding is indicated with 2.

The head includes a housing slot 3 for the protection device, placed in a suitable position and in intimate contact with winding 2.

The device consists of a fuse 4, constructed in an alloy which melts at a temperature corresponding to the maximum one fixed by the standard for this type of motor. The fuse has the form, cross-section and length such as to constitute a resistor which melts when carrying, for a certain time (1-2 seconds), a high current, normally corresponding to the blocked rotor test.

Two terminals 5 and 6 connect the device to two leads 7 and 8, which are then connected to the motor power supply terminals in such a manner that the device is connected, as a result, in series with the motor winding itself.

The device is, in turn, housed in a container made of thin dielectric material which, in the example shown here, consists of two semi-shells 9 coupled by means of rivets passing through the corresponding holes 10 drilled through the above-mentioned semi-shells.

The device functions as follows:
when the winding against which device 4 is housed reaches the temperature at which it (the device) has been calibrated, it melts interrupting the (motor) current. The same happens in the case in which the current carried by it rises, for a few seconds, to the calibration value.

Using this system, the functions carried out until now by two different devices have been united in a single one, with a considerable reduction in cost. This is accompanied by a significant simplification in the construction of the motor, by eliminating the housing for the second device, and in the assembly operations on the motor itself.

It is evident that the design example has been presented as a non-limiting illustrative sample. The device can also be constructed and used in a different manner, for instance in a different form or mounted differently on the motor.

It is also stated that the device in accordance with the invention can be used with advantage also as a protection against elevated currents only, replacing temperature regulators and avoiding the drawbacks of these devices referred to above.

## Claims

1. Device for the protection of electric motors against high temperatures and currents characterised by the fact that it consists of a single controlled-resistance element 4 which melts at a high temperature, mounted in a housing 3 in one of the two insulating heads 1 of the motor and in intimate contact with winding 2, the element being constructed of an alloy which melts at a predetermined temperature as soon as the latter is reached and having a shape, cross-section and length such as to constitute a resistor which melts if it carries a predetermined current.

2. Device in accordance with claim 1, characterised by the fact that its shape, cross-section and length are determined so as to constitute a resistor which is capable of melting not immediately, but after the device has carried a current, for which it had been calibrated, over a predetermined time period.

3. Device in accordance with claim 1, characterised by the fact that it is housed in a container made of thin dielectric material, formed by two semi-shells 9, joined by rivets passing through corresponding holes 10, drilled through the bodies of the above-mentioned semi-shells.

4. Device in accordance with claim 1, characterised by the fact that it is mounted in a housing 3, placed in a suitable position within the structure of the motor and mounted in intimate contact with winding 2.

5. Device in accordance with claim 1, characterised by the fact that it can be employed to advantage even when it is only used as a device for protecting the motor against (excessive) current.
